# EUROPÄISCHE PATENTANMELDUNG

(11) **EP 2 770 040 A2**
(43) Veröffentlichungstag der Anmeldung: **27.08.2014**
(21) Anmeldenummer: 14156463.3
(22) Anmeldetag: 25.02.2014
(51) Int. Cl.: C10G 3/00, C10G 65/12, C10G 69/04, C10G 69/06

(54) **Verfahren zur Herstellung von Bio-Kohlenwasserstoffen**

(30) Priorität: 26.02.2013 EP 13156734
(71) Anmelder: BASF SE, 67056 Ludwigshafen (DE)
(72) Erfinder: Weck, Alexander, 67251 Freinsheim (DE)
(74) Vertreter: Féaux de Lacroix, Stefan

(57) **Zusammenfassung**

Verfahren zur Herstellung von Bio-Kohlenwasserstoffen, umfassend die Schritte
a) Totalhydrierung tierischer und/oder pflanzlicher Öle, Fette oder Gemische davon, wobei aus dem Glycerinanteil der Öle, Fette oder Gemische davon Propan gebildet wird und aus dem Fettsäureanteil der Öle, Fette oder Gemische davon die entsprechenden Alkane gebildet werden,
b) Cracken der in Schritt a) erhaltenen Kohlenwasserstoffe durch thermisches Cracken, katalytisches Cracken oder Hydrocracken zur Bildung der Bio-Kohlenwasserstoffe.

## Beschreibung

Die Erfindung betrifft Verfahren zur Herstellung von Bio-Kohlenwasserstoffen und die Verwendung von totalhydrierten tierischen und/oder pflanzlichen Ölen als Einsatzprodukt (Feedstock) eines Crackers.

Die chemische Industrie ist durch vielstufige Wertschöpfungsketten gekennzeichnet, die weit verästelt sind. Ausgangsstoffe sind beispielsweise Luft, Erdgase, Naphtha, o-Phosphat, Kalisalz, Vakuumrückstände, Steinsalz, Schwefel, Benzol, Cyclohexan und o-Xylol. Produkte sind beispielsweise Propanol, Ethanolamin, Diethanolamin, C₁₂₋₁₄-Olefine, C₁₃₋₁₅-Alkohole, Glyco-lether, Styrol/Butadien-Copolymere, Polyisobuten, Butyrolacton, Tetrahydrofuran, Methylacrylat, Dimethylacetamid, Acrylsäureester, Butyraldehyde, Butanole, Ketene, Kohlensäure, Melamin, Polyvinylchlorid, Propylenglykole, Natriumnitrid und Natriumnitrat, Natriumsulfit, Natriumbisulfit, Hydrosulfit, Adipinsäure/Hexamethylendiamin-Salz, Adipinsäure und Caprolactam. Diese Produkte werden zur Weiterverarbeitung zu Endprodukten eingesetzt.

Der Einsatz erneuerbarer Rohstoffe in diesem Verbund ist dann besonders vorteilhaft, wenn er am Anfang der Wertschöpfungsketten erfolgt, weil so bestehende Strukturen weitergenutzt werden können und durch die weitgehende Vernetzung der letzten, die Endprodukte erzeugenden Ebene alle Produkte durch wenige Edukte erreichbar werden. Endprodukte sind dabei beispielsweise Wachse, Tenside, Weichmacher, Polymere, Lösungsmittel, Klebstoffe, Dispersionen usw.

Dieser Multiplikationseffekt macht den Einsatz erneuerbarer Substitute für die Haupteingangsstoffe Naphtha, Erdgas und Vakuumrückstand besonders attraktiv, da die erneuerbaren Rohstoffe innerhalb der gesamten Wertschöpfungskette weiterverwendet werden.

Während zur Herstellung von Synthesegas, Wasserstoff und Kohlenmonoxid unmittelbare Substitute, wie Pflanzenöle für Vakuumrückstand und Biogas für Erdgas geeignet sind, kann Naphtha, beispielsweise für Steamcracker, nicht vollständig durch sauerstoffhaltige Verbindungen, wie Öle und Fette pflanzlichen und tierischen Ursprungs ersetzt werden, weil die durch den Sauerstoffeintrag in erheblichem Maße gebildeten Oxygenate zu starken Korrosionserscheinungen an Anlageteilen führen und Prozessstörungen bis hin zur Verstopfung von Rohrleitungen verursachen. Ferner neigen insbesondere die in natürlichen Fetten und Ölen vorkommenden ungesättigten Fettsäuren zum Verharzen und beschleunigen daher Verschmutzungen und Anwüchse (Fouling) in den Eingangsstufen des Gesamtprozesses stark.

Unterschiedliche Wege zur Verminderung des Foulings sind bereits bekannt.

EP-A-2 290 034 beschreibt den Einsatz von Fettsäuren im Feedstock eines Steamcrackers. Die Fettsäuren werden dabei erhalten durch Abtrennung der Flüssigfraktionen von Fetten und Ölen von der festen Fraktion durch Dampfdestillation oder Vakuumdestillation. Zuvor wurde eine Hydrolyse der Fette durchgeführt und Glycerin wurde abgetrennt. Ferner kann eine vorgelagerte Teilhydrierung durchgeführt werden, um die Doppelbindungen in gesättigte Bindungen in den Fettsäuren zu überführen. Die Hydrierung kann auch direkt an den Triglyceriden durchgeführt werden.

Die WO 2011/012439 beschreibt ein Verfahren, bei dem ein komplexes Gemisch natürlicher Fette und Öle zunächst zur Entfernung von Nicht-Triglyceriden und Nicht-Fettsäuren raffiniert wird, sodann beispielsweise hydrodeoxygeniert wird und anschließend nach einem Auftrennungsschritt gegebenenfalls in einen Steamcracker geführt wird.

Die EP-A-2 290 045 beschreibt ein Verfahren zur Herstellung von Biodiesel und Bio-Naphtha und wahlweise Bio-Propan aus einem komplexen Gemisch natürlicher Fette und Öle, wobei die natürlichen Fette und Öle zunächst in flüssige und feste Triglyceride aufgetrennt werden, die flüssigen Triglyceride in Alkylester durch Umesterung umgewandelt werden und die festen Triglyceride in lineare oder im Wesentlichen lineare Paraffine umgewandelt werden durch Hydrodeoxygenierung. Es können auch zunächst die freien Fettsäuren gebildet werden, die sodann durch Hydrodeoxygenierung oder Decarboxylierung umgewandelt werden.

Die Fettsäuren können durch physikalische Verfahren, wie Dampfdestillation oder Vakuumdestillation der Fette und Öle erhalten werden, wie auch durch Hydrolyse der Triglyceride oder Säurespaltung von Seifen.

Damit ist eine weitgehende Vorbehandlung und Aufteilung der Öle vor und nach der Hydrierung notwendig, so dass das Verfahren insgesamt aufwendig ist und mit Abfallströmen belastet ist.

Die US 2007/0015947 A1 betrifft ein Verfahren zum katalytischen Cracken von bioerneuerbaren Feedstocks, wobei der Feedstock in einem vorgelagertem Schritt von Verunreinigungen befreit wird, beispielsweise durch Kontaktieren mit einem sauren Ionentauscherharz. Sodann wird der Feedstock dem FCC-Cracking unterworfen.

US 2009/0084026 A1 betrifft ein Verfahren, bei dem ein aus natürlichen Quellen stammendes Öl zunächst hydrolysiert wird zur Bildung freier Fettsäuren, nachfolgend die Fettsäuren in monoungesättigte Fettsäuren und gesättigte Fettsäuren und polyungesättigte Fettsäuren getrennt werden, die monoungesättigten und gesättigten Fettsäuren verestert werden und die polyungesättigten Fettsäuren einer Hydrobehandlung unterworfen werden.

Damit ist in beiden Verfahren ebenfalls eine aufwendige Vorbehandlung der Einsatzstoffe notwendig.

Aufgabe der vorliegenden Erfindung ist die Bereitstellung eines Verfahrens zur Herstellung von Bio-Kohlenwasserstoffen, bei dem tierische und/oder pflanzliche Öle, Fette oder Gemische davon eingesetzt werden, wobei ein maximal möglicher Anteil des in den Ölen, Fetten oder Gemischen davon vorliegenden Kohlenstoffs in die Bio-Kohlenwasserstoffe überführt wird und eine Auftrennung der Öle, Fette oder Gemische davon vor dem Einsatz in einem (Steam)cracker nicht notwendig ist.

Die Aufgabe wird erfindungsgemäß gelöst durch ein Verfahren zur Herstellung von Bio-Kohlenwasserstoffen, umfassend die Schritte
a) Totalhydrierung tierischer und/oder pflanzlicher Öle, Fette oder Gemische davon, wobei aus dem Glycerinanteil der Öle, Fette oder Gemische davon Propan gebildet wird und aus dem Fettsäureanteil der Öle, Fette oder Gemische davon die entsprechenden, vorzugsweise geradkettigen, Alkane gebildet werden,
b) Cracken der in Schritt a) erhaltenen Kohlenwasserstoffe durch thermisches Cracken, katalytisches Cracken oder Hydrocracken zur Bildung der Bio-Kohlenwasserstoffe.

Die Aufgabe wird zudem gelöst durch die Verwendung von totalhydrierten tierischen und/oder pflanzlichen Ölen, Fetten oder Gemischen davon, wobei aus dem Glycerinanteil der Öle, Fette oder Gemische davon Propan gebildet wird und aus dem Fettsäureanteil der Öle, Fette oder Gemische davon die entsprechenden, vorzugsweise geradkettigen, Alkane gebildet werden, als Einsatzprodukt (Feedstock) eines Crackers.

Es wurde erfindungsgemäß gefunden, dass durch Totalhydrierung tierischer und/oder pflanzlicher Öle, Fette oder Gemische davon ein Produktstrom erhalten wird, der ohne weitere Aufarbeitung oder Auftrennung in einen Cracker geführt und dort weiterverarbeitet werden kann.

In Schritt a) entstehen aus dem Glycerinanteil der Öle, Fette oder Gemische davon Propan und aus dem Fettsäureanteil der Öle, Fette oder Gemische davon die entsprechenden, vorzugsweise geradkettigen, Alkane.

Unter dem Begriff "geradkettige Alkane" werden Alkane verstanden, die zumindest 90 Gew.-%, vorzugsweise zumindest 95 Gew.-%, insbesondere zumindest 99 Gew.-% aus linearen Alkanen zusammengesetzt sind.

Die geradkettigen Alkane können beispielsweise bereits als Biodiesel II lauf dem Markt für Treibstoffe angeboten und eingesetzt werden. Die Gemische aus erhaltenem Propan und Alkanen können ohne jegliche Einbuße in Ausbeute und Prozesssicherheit in nachfolgende Crackprozesse eingebracht werden.

Besonders vorteilhaft ist eine Integration der Hydrierung der Öle und Fette tierischen und pflanzlichen Ursprungs in die Rohstoffzufuhr des Crackers:
Eine Auftrennung der Reaktionsprodukte kann entfallen, der aus kleinen Mengen Restwasserstoff, Propan und den (langkettigen) Alkanen bestehenden Rohaustrag der Hydrierung kann direkt, d. h. ohne Aufreinigungs- und/oder Abtrennschritte, der Feed-Verdampfung des (Steam)Crackers zugeführt werden.

Durch die direkte Zuführung des Rohaustrages aus der Totalhydrierung, ohne Aufreinigungs- und/oder Abtrennschritte, in den Cracker, wird der volle natürliche Kohlenstoffgehalt des Eduktes für die nachfolgende Verarbeitung im Cracker und damit für die daran anschließenden Wertschöpfungsketten nutzbar gemacht. Bei einer Nutzung von Biodiesel II würde das Propan in der Biodiesel-Anlage zum Zwecke der Energiegewinnung und nicht stofflich genutzt. Bevorzugt ist die vollständige Nutzung des Rohaustrages der Hydrierung.

Zur Hydrierung kann produkthaltiger Roh-Wasserstoff aus dem Cracker genutzt werden. Dieser muss nicht aufgearbeitet werden, da eine Kontamination der Hydrierung mit den eigenen Produkten unkritisch ist.

Durch Einsatz der totalhydrierten tierischen und/oder pflanzlichen Öle, Fette oder Gemische davon in einem hochgradig vernetzten Verbundstandort zur Herstellung chemischer Zwischenund Endprodukte können die daraus erwachsenden Vorteile, wie Verminderung des Rohstoffund Energiebedarfs und Minimierung des Anfalls von Abfall und Entsorgungsströmen, verwirklicht werden.

Bringt man in eine derartige Verbundstruktur biogene Rohstoffe ein, so verteilen sich diese nach wenigen Produktionsschritten über die ganze Wertschöpfungskette.

Erfindungsgemäß werden unter dem Begriff "Bio-Kohlenwasserstoff" solche Kohlenwasserstoffe verstanden, deren Kohlenstoffgehalt ganz oder überwiegend aus nachwachsenden Rohstoffen auf tierischer oder pflanzlicher Basis stammt. Insbesondere stammen die im Bio-Kohlenwasserstoff enthaltenen Kohlenstoffatome ganz oder überwiegend aus tierischen und/oder pflanzlichen Ölen, Fetten oder Gemischen davon. Diese Rohstoffe können auch als biogene Rohstoffe oder erneuerbare Rohstoffe oder nachwachsende Rohstoffe bezeichnet werden.

Unter "tierischen und/oder pflanzlichen Ölen, Fetten oder Gemischen davon" werden Produkte verstanden, die ganz überwiegend aus Triglyceriden von Fettsäuren aufgebaut sind. Geeignete Quellen sind beispielsweise in US 2007/0015947 in Absatz [0007] aufgeführt. Ferner kann auf EP-A-2 290 045, insbesondere Absatz [0005] und [0011] verwiesen werden.

Die tierischen und/oder pflanzlichen Öle, Fette oder Gemische davon können aus beliebigen Quellen stammen. Sie können beispielsweise vor dem Einsatz in Schritt a) aus Biomasse extrahiert oder gewonnen werden. Entsprechende Verfahren zum Abtrennen/Extrahieren der Öle, Fette oder Gemisch davon sind bekannt. Beispielsweise kann auf die eingangs im Stand der Technik zitierten Schriften verwiesen werden.

Vorzugsweise wird vor der Totalhydrierung kein chemisches oder physikalisches Refining (Raffinieren) durchgeführt, insbesondere kein Entgumen, ggfs. Neutralisieren, Bleichen und Desodorieren, wie es in WO 2011/012439 beschrieben ist. Die tierischen und/oder pflanzlichen Öle, Fette oder Gemische davon werden entsprechend ohne vorausgehendes derartiges chemisches oder physikalisches Refining durch die genannten Sequenzen in die Totalhydrierung geführt.

Die hierzu eingesetzte Biomasse kann aus beliebigen geeigneten Quellen stammen, beispielsweise aus Wildpflanzen, Kulturpflanzen, wie Getreide, Mais, Rüben oder Gemüsen, aus Microalgen oder Gemischen davon.

Der Begriff "Totalhydrierung" bedeutet, dass die tierischen und/oder pflanzlichen Öle oder Fette oder Gemische davon soweit hydriert werden, dass im Produkte keine oder nur verschwindende Mengen an gebundenem Sauerstoff vorliegen. Zudem liegen keine oder nur untergeordnete Mengen an Kohlenstoff-Kohlenstoff-Doppelbindungen in den Produkten vor. Entsprechend wird aus dem Glycerinanteil der Öle, Fette oder Gemische davon Propan gebildet, und aus dem Fettsäureanteil der Öle, Fette oder Gemische davon werden die entsprechenden, um ein Kohlenstoffatom verkürzten geradkettigen Alkane gebildet.

Es wurde erfindungsgemäß gefunden, dass das so erhaltene Hydrierungsprodukt ohne weitere Aufreinigungs- oder Abtrennungsschritte in einem Cracker weiter umgesetzt werden kann, ohne dass die Funktionsweise des Crackers beeinträchtigt wird.

Der aus Schritt a) stammende Strom, bzw. die aus Schritt a) stammenden Kohlenwasserstoffe können damit allein oder zusammen mit Naphtha und/oder Erdgas in den Cracker eingeführt werden und in Schritt b) gecrackt werden.

Die Totalhydrierung kann erfindungsgemäß nach bekannten Verfahren erfolgen. Dabei wird die Totalhydrierung vorzugsweise an einem Katalysator durchgeführt, der ausgewählt ist aus Kupfer, Edelmetallen oder Gemischen davon als katalytisch aktive Metalle enthaltenden Katalysatoren.

Das Cracken der in Schritt a) erhaltenen Kohlenwasserstoffe erfolgt durch thermischen Cracken, katalytisches Cracken oder Hydrocracken. Entsprechende Crackverfahren sind allgemein bekannt und beispielsweise beschrieben in K. Weissermel, H.-J. Arpe, Industrielle Organische Chemie, Bedeutende Vor- und Zwischenprodukte, 3. Auflage, 1990, Kapitel 3 auf Seiten 63 bis 80.

Das katalytische Cracken wird auch als FCC (Fluid Catalytic Cracking) beschrieben, da es zumeist im Fließbett oder in einem Reaktor mit aufsteigendem Katalysator (Risercracking) durchgeführt wird. Als Crack-Katalysatoren werden typischerweise Zeolithe eingesetzt.

Auch das ACR-Verfahren (Advanced Cracking Reactor) kann als Crackverfahren durchgeführt werden.

Beim Hydrocracken, einem katalytischen Cracken in Gegenwart von Wasserstoff werden bevorzugt gesättigte, verzweigte Kohlenwasserstoffe gebildet. Im Hydrocrack-Prozess werden die Einsatzprodukte gleichzeitig entschwefelt und denitrifiziert, d. h. raffiniert.

Das thermische Cracken wird katalysatorfrei durchgeführt und führt in der Regel zu einem hohen Anteil an Olefinen. Um dem Partialdruck der Kohlenwasserstoffe zu erniedrigen, mischt man häufig ein Fremdgas, zumeist Wasserdampf, dem thermisch zu behandelnden Kohlenwasserstoffschnitt bei. Dieses als Dampfspaltung oder Steamcracken bezeichnete Verfahren wird erfindungsgemäß bevorzugt. Bevorzugt wird demnach Schritt b) in einem Steamcracker durchgeführt unter Bildung von Bio-Ethylen, Bio-Propylen und Bio-Butene und Bio-Butadien sowie Bio-Butane enthaltenden Bio-C₄-Schnitten.

Eine Zusammensetzung eines typischen C₄-Schnittes beim Steamcracken und katalytischen Cracken ist im Weissermel/Arpe auf Seite 73 in Tabelle 3-3 beschrieben.

Das erfindungsgemäße Cracken in Schritt b), insbesondere das Steamcracken, kann nach beliebigen geeigneten bekannten Verfahren betrieben werden.

Der zur Totalhydierung in Schritt a) eingesetzte Wasserstoff kann dabei aus beliebigen geeigneten Quellen stammen. Beispielsweise und bevorzugt kann der in Schritt a) eingesetzte Wasserstoff zumindest teilweise oder vollständig aus dem Schritt b) stammen und im Cracker gebildete Spaltprodukte enthalten. Dies ist unschädlich für das erfindungsgemäße Verfahren, da die Spaltprodukte im Cracker wieder umgesetzt werden.

Ebenso kann das in Schritt a) erhaltene Produktgemisch ohne weitere Aufarbeitung in den Cracker geführt werden, was eine erhebliche Verfahrensvereinfachung darstellt.

Im erfindungsgemäßen Verfahren werden besonders bevorzugt C₂₋₄-Olefine als Bio-Kohlenwasserstoffe gebildet. Diese Produkte können entsprechend einer "Green Chemistry" in einer grünen Folgechemie eingesetzt werden, so dass eine grüne Wertschöpfungskette resultiert. Dabei bedeutet "grün" den Einsatz erneuerbarer Rohstoffe.

Die Erfindung wird durch das nachstehende Beispiel näher erläutert.

### Beispiel

a) Ein Gemisch pflanzlicher Öle auf Basis von Rapsöl wird in einem Hydrierreaktor unter Wasserstoffeintrag katalytisch totalhydriert, wobei ein Alkangemisch erhalten wird, das bis auf Spuren frei von Oxigenaten ist und Propan und Alkane mit derselben Kohlenstoffzahl wie im Fettsäurerest des Öls enthält,
b) das in Schritt a) erhaltene Alkangemisch wird direkt, d. h. ohne weitere Aufarbeitungsschritte, in einem Steamcracker umgesetzt zu einem Gemisch aus überwiegend Ethylen, Propylen und einem C₄-Schritt, der Butane, Butene und Butadien enthält. Für diesen Schritt kann auf das in EP-A-2 290 034 beschriebene Verfahren und die dort genannten Parameter verwiesen werden.

## Patentansprüche

1. Verfahren zur Herstellung von Bio-Kohlenwasserstoffen, umfassend die Schritte
a) Totalhydrierung tierischer und/oder pflanzlicher Öle, Fette oder Gemische davon, wobei aus dem Glycerinanteil der Öle, Fette oder Gemische davon Propan gebildet wird und aus dem Fettsäureanteil der Öle, Fette oder Gemische davon die entsprechenden Alkane gebildet werden,
b) Cracken der in Schritt a) erhaltenen Kohlenwasserstoffe durch thermisches Cracken, katalytisches Cracken oder Hydrocracken zur Bildung der Bio-Kohlenwasserstoffe.

2. Verfahren nach Anspruch 1, **dadurch gekennzeichnet, dass** das gesamte in Schritt a) erhaltene Produktgemisch ohne weitere Aufarbeitung in den Cracker geführt wird.

3. Verfahren nach Anspruch 1 oder 2, **dadurch gekennzeichnet, dass** Schritt b) in einem Steamcracker durchgeführt wird unter Bildung von Bio-Ethylen, Bio-Propylen und Bio-Butene und Bio-Butadien sowie Bio-Butane enthaltenden Bio-C₄-Schnitten.

4. Verfahren nach einem der Ansprüche 1 bis 3, **dadurch gekennzeichnet, dass** der zur Totalhydrierung in Schritt a) eingesetzte Wasserstoff zumindest teilweise aus dem Schritt b) stammt und im Cracker gebildete Spaltprodukte enthalten kann.

5. Verfahren nach einem der Ansprüche 1 bis 4, **dadurch gekennzeichnet, dass** die tierischen und/oder pflanzlichen Öle, Fette oder Gemische davon vor dem Einsatz in Schritt a) aus Biomasse extrahiert werden.

6. Verfahren nach Anspruch 5, **dadurch gekennzeichnet, dass** die Biomasse aus Wildpflanzen, Kulturpflanzen, wie Getreide, Mais, Rüben oder Gemüsen, aus Microalgen oder Gemischen davon stammt.

7. Verfahren nach einem der Ansprüche 1 bis 6, **dadurch gekennzeichnet, dass** die aus Schritt a) stammenden Kohlenwasserstoffe zusammen mit Gasöl, Flüssiggas, Raffineriegasen, Naphtha und/oder Erdgas in Schritt b) gecrackt werden.

8. Verfahren nach einem der Ansprüche 1 bis 7, **dadurch gekennzeichnet, dass** die Totalhydrierung an einem Katalysator durchgeführt wird, der ausgewählt ist aus Kupfer, Edelmetallen oder Gemischen davon als katalytisch aktive Metalle enthaltenden Katalysatoren.

9. Verwendung von totalhydrierten tierischen und/oder pflanzlichen Ölen, Fetten oder Gemischen davon, wobei aus dem Glycerinanteil der Öle, Fette oder Gemische davon Propan gebildet wird und aus dem Fettsäureanteil der Öle, Fette oder Gemische davon die entsprechenden Alkane gebildet werden, als Einsatzprodukt (Feedstock) eines Crackers.

10. Verwendung nach Anspruch 9, **dadurch gekennzeichnet, dass** der Cracker ein Steamcracker ist.
